Europäisches Patentamt

European Patent Office

Office européen des brevets

(11) Veröffentlichungsnummer: **0 268 770**
**A1**

## EUROPÄISCHE PATENTANMELDUNG

(21) Anmeldenummer: 87113629.7

(22) Anmeldetag: 17.09.87

(51) Int. Cl.⁴: **H02K 11/00 , H04B 15/02**

(30) Priorität: 30.09.86 DE 3633254

(43) Veröffentlichungstag der Anmeldung:
**01.06.88 Patentblatt 88/22**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Gaebel, Heinz-Ulrich, Dipl.-Ing.**
**Stoehrstrasse 22**
**D-8700 Würzburg(DE)**
Erfinder: **Kirchner, Heinrich, Dipl.-Ing.**
**Hüttenweg 27**
**D-8700 Würzburg(DE)**
Erfinder: **Maxa, Vladimir, Dipl.-Ing.**
**Pariser Strasse 10**
**D-8700 Würzburg(DE)**
Erfinder: **Winter, Udo, Dr.**
**Heinrich Lübke-Strasse 19**
**D-8702 Kürnach(DE)**

(54) **Entstörter Gleichstrom-Kommutatormotor.**

(57) Um die Entstörung eines elektromotorischen Kfz-Hilfsantriebes, insbesondere im Sinne einer elektromagnetischen Verträglichkeit (EMV), verbessern zu können, ist parallel zum Ankerstromzweig (1) des Kommutatormotors (M) ein Schutz-Stromzweig (2 bzw. 3) mit zwei in Gegenreihenschaltung angeordneten Z-Dioden (D1;D2) bzw. mit einem Varistor (V1) vorgesehen, wobei zur Reduzierung der Zahl der äußeren Lötanschlüsse die Z-Dioden (D1;D2) bzw. der Varistor (V1) mit den Entstörkondensatoren (C1;C2) zu einem gemeinsamen, nur noch drei Außenanschlüsse aufweisenden Integrations-Bauteil (6) zusammengefaßt sind.

FIG 3

## Entstörter Gleichstrom-Kommutatormotor

Die Erfindung bezieht sich auf einen entstörten Gleichstrom-Kommutatormotor gemäß Oberbegriff des Anspruchs 1 bzw. des nebengeordneten Anspruchs 3; ein derartiger Kommutatormotor ist durch eine offenkundige Vorbenutzung allgemein bekannt.

Die Entstörung von Gleichstrom-Kommutatormotoren, insbesondere die Funkentstörung bei Kraftfahrzeug-Hilfsmotoren, erfolgt bekanntermaßen durch in Reihe zu den Bürsten geschaltete Entstörinduktivitäten und/oder durch parallel zum Ankerstromzweig des Kommutatormotors in Reihe angeordnete Entstörkondensatoren.

Es ist weiterhin bekannt (Buch "Elektrische Kleinstmotoren und ihr Einsatz" von Helmut Moczala, Expert-Verlag, 1979, Seiten 123, 124), bei Universalmotoren die Bauteile der Funkentstörung in einem gemeinsamen, gesonderten Gehäuse unterzubringen und den Mittenanschluß zwischen den parallel zum Ankerstromzweig in Reihe liegenden Entstörkondensatoren leitend mit dem Gehäuse zu verbinden.

Der Erfindung liegt die Aufgabe zugrunde, die Entstörung, insbesondere im Sinne einer elektromagnetischen Verträglichkeit, dahingehend zu verbessern, daß trotz der beim Schalten des Kommutatormotors gegebenenfalls auftretenden Spannungsspitzen die einwandfreie Funktion des elektrischen Bord-Neztes gewährleistet werden kann.

Die Lösung dieser Aufgabe ist bei einem Gleichstrom-Kommutatormotor der eingangs genannten Art erfindungsgemäß durch die kennzeichnenden Merkmale der nebengeordneten Ansprüche 1 und 3 möglich; vorteilhafte Ausgestaltungen der Erfindung sind jeweils Gegenstand der Unteransprüche.

Durch die erfindungsgemäße Entstörung wird sichergestellt, daß die beim Schalten des Kommutatormotors auftretenden Spannungsspitzen nicht in das Bordnetz gelangen und die einwandfreie Funktion der nachgeschalteten Elektronik stören können, da durch die Anordnung der Z-Dioden der Ankerstromzweig des Kommutatormotors beim ersten Auftreten einer unzulässigen Spannungsspitze selbsttätig kurzgeschlossen wird und somit die unzulässige Spannung über den nun durchlässigen Schutz-Stromzweig abgebaut wird. Die Spitze des Störspannungsimpulses wird unter gleichzeitiger Änderung der Impulsbreite und Verringerung der Flankensteilheit ausgefiltert, so daß über das Bordnetz keine schädigenden Störspannungswerte die Elektronik erreichen.

Durch Dimensionierung der Z-Dioden gemäß Anspruch 4 wird einerseits der Wert des auftretenden Störspannungsimpulses auf etwa 20 Prozent des ursprünglichen Spannungswertes reduziert und somit die Störung der nachgeschalteten Elektronik zuverlässig verhindert, andererseits wird durch diese Dimensionierung sichergestellt, daß die Z-Diode nicht schon bereits bei geringen, durch den Generator erzeugten und für die nachgeschaltete Elektronik ungefährlichen Überspannungswerten den Ankerstromzweig des Kommutatormotors kurzschließt.

In überraschender Weise hat sich herausgestellt, daß die vorgenannten Vorteile auch mit einem wesentlich geringerem Bauteile-und Montageaufwand durch lediglich einen im Schutz-Stromzweig angeordneten Varistor erzielbar sind, dessen Spannungsschwellwert größer als die Betriebsspannung ist. Unter Spannungsschwellwert des Varistors sind hierbei die beiden Arbeitspunkte in der symmetrischen Kennlinie zu verstehen, bei welchen der Varistor vom hochohmigen in den elektrisch leitenden Zustand übergeht und ein spannungsabhängiger Stromfluß erfolgt.

Gleichzeitig mit der elektromagnetischen Verträglichkeit kann auf einfache Weise eine Funkentstörung bei dem hier vorgesehe nen Gleichstromkommutator dadurch verbessert werden, daß der Schutz-Stromzweig mit den in Gegenreihenschaltung angeordneten Z-Dioden bzw. der Schutz-Stromzweig mit dem Varistor an die betriebsspannungsseitigen Anschlüsse der Entstörinduktivitäten in den Zuleitungen zum Ankerstromzweig angeschlossen werden, wobei der Aufwand für eine Kontaktierung beim Einbau dieser Entstöreinrichtung in vorteilhafter Weise durch die Zusammenfassung der beiden Z-Dioden zu einer bidirektionalen Z-Diode oder sogar durch die Zusammenfassung der Z-Dioden bzw. des Varistors und der Entstörkondensatoren zu einem gemeinsamen Integrations-Bauteil mit nur insgesamt drei äußeren Anschlüssen verringert wird.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1 eine erste Ausführungsform der erfindungsgemäßen Entstörschaltung, in der parallel zum Ankerstromzweig des Kommutatormotors zwei Z-Dioden in Gegenreihenschaltung angeordnet sind;

Fig. 2 eine zweite Ausführungsform der erfindungsgemäßen Entstörschaltung, in der die parallel zum Ankerstromzweig des Kommutatormotors angeordneten Entstörbauelemente zu einem nur drei Außenanschlüsse aufweisenden Integrations-Bauteil zusammengefaßt sind;

Fig. 3 eine Ausführungsform der erfindungsgemäßen Entstörschaltung, in der lediglich ein Varistor parallel zum Ankerstromzweig des Kommutatormotors angeordnet ist.

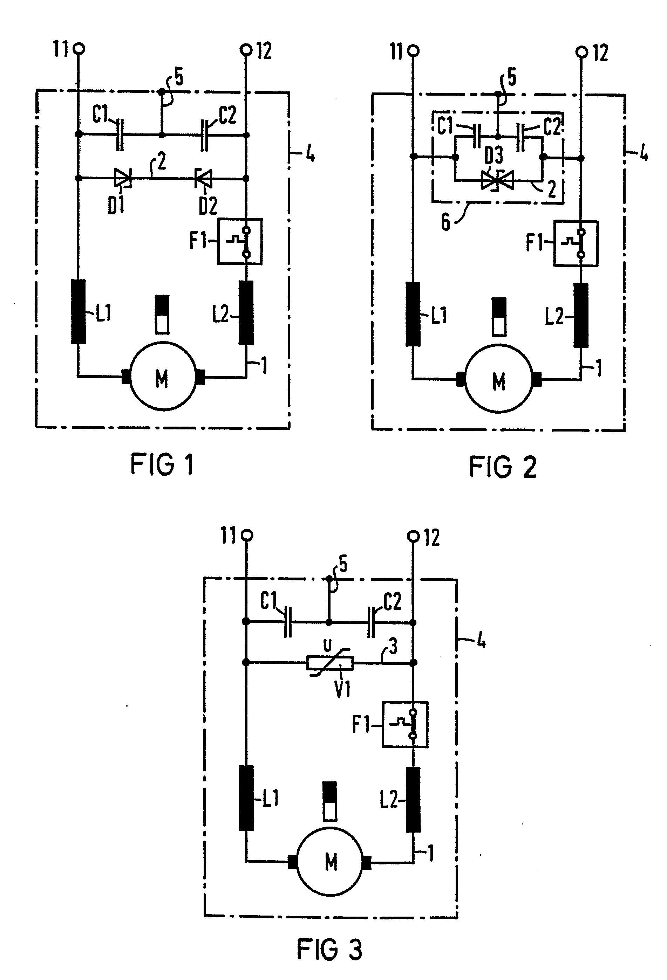

Die Figuren 1 bis 3 zeigen einen z.B. für einen Lüfterantrieb oder einen elektromotorischen Fensterheberantrieb einsetzbaren Gleichstrom-Kommutatormotor mit permanentmagnetischer Erregung, der über Eingangsanschlüsse 11, 12 an das speisende Gleichstromnetz eines Kraftfahrzeuges angeschlossen ist und in bekannter Weise durch einen in der Zuleitung zum Anker stromzweig 1 des Kommutatormotors M liegenden Thermoschutz F1 gegen thermische Überlastung geschützt ist. Zur Funkentstörung sind sowohl in Reihe zum Ankerstromzweig 1 je eine Entstörinduktivität L1, L2 in jede der beiden Zuleitungen als auch parallel zum Ankerstromzweig 1 zwei in Reihe geschaltete Entstörkondensatoren C1, C2 vorgesehen.

Gemäß Fig. 1 ist die erfindungsgemäße elektromagnetische Verträglichkeit des Gleichstrom-Kommutatormotors durch einen parallel zum Ankerstromzweig 1 des Kommutatormotors angeordneten Schutz-Stromzweig 2 mit zwei in Gegenreihenschaltung angeordneten Z-Dioden D1, D2 sichergestellt. In der Entstörschaltung gemäß Fig. 3 ist parallel zum Ankerstromzweig 1 des Kommutatormotors M anstelle der beiden Z-Dioden D1, D2 erfindungsgemäß lediglich ein Varistor V1 geschaltet.

Zur gleichzeitigen Verbesserung der Funkentstörung ist eine elektrische Verbindung 5 zwischen dem Anschluß der beiden Entstörkondensatoren C1, C2 untereinander und dem Motorgehäuse 4 vorgesehen.

Fig. 2 zeigt den Ersatz der beiden Z-Dioden D1, D2 durch eine bidirektionale Z-Diode D3 und darüberhinaus die erfindungsgemäße Zusammenfassung der parallel zum Ankerstromzweig 1 des Kommutatormotors M geschalteten Z-Diode D3 und der Entstörkondensatoren C1, C2 zu einem einzigen Integrations-Bauteil 6, derart daß bei der Montage nur noch je ein Außenanschluß mit den Eingangsanschlüssen 11, 12 der Betriebsspannung und ein Außenanschluß mit dem Motorgehäuse 4 zu kontaktieren sind.

## Ansprüche

1. Entstörter Gleichstrom-Kommutatormotor mit Drehrichtungsumschaltung durch Umpolen der Betriebsspannung einer aus einem Gleichstromnetz gespeisten Ankerwicklung, insbesondere für Kraftfahrzeug-Hilfsantriebe, **dadurch gekennzeichnet,** daß parallel zum Ankerstromzweig (1) des Kommutatormotors (M) ein Schutz-Stromzweig (2) mit zumindest zwei in Gegenreihenschaltung angeordneten Z-Dioden (D1;D2) vorgesehen ist, deren Durchbruchspannung je Stromrichtung größer als die Betriebsspannung ist.

2. Entstörter Gleichstrom-Kommutatormotor nach Anspruch 1, **dadurch gekennzeichnet,** daß anstelle der zwei in Gegenreihenschaltung angeordneten Z-Dioden (D1;D2) zumindest eine bidirektionale Z-Diode (D3) vorgesehen ist.

3. Entstörter Gleichstrom-Kommutatormotor mit Drehrichtungsumschaltung durch Umpolen der Betriebsspannung einer aus einem Gleichstromnetz gespeisten Ankerwicklung, insbesondere für Kraftfahrzeug-Hilfsantriebe, **dadurch gekennzeichnet,** daß parallel zum Ankerstromzweig (1) des Kommutatormotors (M) ein Schutz-Stromzweig (3) mit zumindest einem Varistor (V1) vorgesehen ist, dessen Spannungsschwellwert je Stromrichtung größer als die Betriebsspannung ist.

4. Entstörter Gleichstrom-Kommutatormotor nach zumindest einem der Ansprüche 1 bis 3, **dadurch gekennzeichnet,** daß die Durchbruchspannung der Z-Dioden (D1;D2;D3) bzw. der Spannungsschwellwert des Varistors (V1) je Stromrichtung etwa doppelt so groß ist wie die Betriebsspannung.

5. Entstörter Gleichstrom-Kommutatormotor mit je einer Entstörinduktivität in beiden Zuleitungen zum Ankerstromzweig nach einem der Ansprüche 1 bis 4, **dadurch gekennzeichnet,** daß der parallel zu dem Ankerstromzweig (1) vorgesehene Schutz-Stromzweig (2 bzw. 3) an die betriebsspannungsseitigen Anschlüsse der Entstörinduktivitäten (L1;L2) angeschlossen ist.

6. Entstörter Gleichstrom-Kommutatormotor mit je einer Entstörinduktivität in beiden Zuleitungen zum Ankerstromzweig und mit parallel zum Ankerstromzweig in Reihe geschalteten Entstörkondensatoren nach einem der Ansprüche 1 bis 4, **dadurch gekennzeichnet,** daß der parallel zu dem Ankerstromzweig (1) vorgesehene Schutz-Stromzweig (2 bzw. 3) im Bereich zwischen den in Reihe geschalteten Kondensatoren (C1;C2) und den betriebsspannungsseitigen Anschlüssen der Entstörinduktivitäten (L1;L2) angeordnet ist.

7. Entstörter Gleichstrom-Kommutatormotor nach einem der Ansprüche 1 bis 6, **gekennzeichnet durch** eine elektrische Verbindung (5) zwischen dem Anschluß der beiden Entstörkondensatoren (C1;C2) untereinander und dem Motorgehäuse (4) des Gleichstrom-Kommutatormotors.

8. Entstörter Gleichstrom-Kommutatormotor nach einem der Ansprüche 1 bis 7, **dadurch gekennzeichnet,** daß der parallel zu dem Ankerstromzweig (1) vorgesehene Schutz-Stromzweig (2 bzw. 3) mit den Z-Dioden (D1;D2;D3) bzw. mit dem Varistor (V1) und die Entstörkondensatoren (C1;C1) zu je einem gemeinsamen Integrations-Bauteil (6) mit je einem Außenanschluß zur Verbindung mit den Eingangsanschlüssen (11; 12) der Betriebsspannung und einem Außenanschluß an das Motorgehäuse (4) zusammengefaßt sind.

0 268 770

86 P 3372

FIG 1

FIG 2

FIG 3

**Europäisches Patentamt**

# EUROPÄISCHER RECHERCHENBERICHT

Nummer der Anmeldung

EP 87 11 3629

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 049 651 (SCHELENZ et al.) <br> * Seite 1, Zeilen 11-22; Seite 2, Zeile 31 - Seite 3, Zeile 32; Seite 4, Zeilen 17-21; Anspruch 3; Figur 2 * <br> --- | 1-3 | H 02 K 11/00 <br> H 04 B 15/02 |
| A | EP-A-0 044 244 (SEH) <br> * Seite 3, Zeilen 27-28; Figur * <br> --- | 3 | |
| A | US-A-2 036 285 (WESTINGHOUSE) <br> * Seite 2, linke Spalte, Zeile 62 - Seite 2, rechte Spalte, Zeile 20; Figur 9 * <br> --- | 5-7 | |
| A | US-A-4 342 013 (KALLMANN) <br> * Spalte 2, Zeile 34 - Spalte 3, Zeile 12; Spalte 4, Zeilen 3-66 * <br> --- | 1,2,5-7 | |
| A | US-A-4 259 705 (STIFFER) <br> * Spalte 2, Zeilen 49-58 * <br> ----- | 8 | |

**RECHERCHIERTE SACHGEBIETE (Int. Cl.4)**

H 02 K 11/00
H 04 B 15/00
H 02 H 9/00

Der vorliegende Recherchenbericht wurde für alle Patentansprüche erstellt

| Recherchenort | Abschlußdatum der Recherche | Prüfer |
|---|---|---|
| DEN HAAG | 01-02-1988 | LE GUAY P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)